Europäisches Patentamt

European Patent Office

Office européen des brevets

(11) Veröffentlichungsnummer: **0 463 201 A1**

(12) **EUROPÄISCHE PATENTANMELDUNG**

(21) Anmeldenummer: **90112027.9**

(22) Anmeldetag: **25.06.90**

(51) Int. Cl.5: **B22D 11/126**, B23D 79/02

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **AUTE Gesellschaft für autogene
Technik mbH
10, Rue St. Honoré
CH-2000 Neuchâtel(CH)**

(72) Erfinder: **Lotz, Tobias
Schindlerstrasse 4
CH-8006 Zürich(CH)**
Erfinder: **Thomma, Günter
Landsberger Strasse 17
W-6200 Wiesbaden-Delkenheim(DE)**

(74) Vertreter: **Blumbach Weser Bergen Kramer
Zwirner Hoffmann Patentanwälte
Radeckestrasse 43
W-8000 München 60(DE)**

(54) **Stahlstranggiessanlage mit mechanischer Entfernungseinrichtung für Sauerstoffschneidbärte.**

(57) Bei einer Stahlstranggießanlage mit doppelt und schnell wirkender mechanischer Entbartungsmaschine bzw. -einheit für beim thermochemischen Unterteilen des Stranges entstehende Brennbärte (7) sind für ruhende oder bewegte Brammenblöcke und -knüppel (2) verfahrende oder stehende Entbartungsmaschinen bzw. -einheiten vorgesehen, wobei ein Scherbalken (5) ortsfest oder verschiebbar unter der Bramme (2) in der waagrechten Ebene schräg zur Bartlinie angeordnet eine geführte, an beiden Enden federnd höhenverstellbare Scherleiste (6) einstückig oder aus einzelnen, federnd gelagerten Teilstücken, gegebenenfalls mit vorderer und hinterer Schneidkante, zum waagrechten oder in der senkrechten Ebene geneigten Andrücken an die Bartlinie trägt.

Bild 1a

Bild 1b

Die Erfindung betrifft eine Stahlstranggießanlage mit doppelt und schnell wirkender mechanischer Entbartungsmaschine bzw. -einheit für beim thermochemischen Unterteilen des Stranges entstehende Brennbärte.

Es sind Stahlstranggießanlagen bekannt, die mit Entbartungseinrichtungen versehen sind. Neben Einrichtungen, die mit Gasen arbeiten und die Brennbärte wegschmelzen, ist es insbesondere bekannt, mechanisch durch kreisrunde Messer oder Scherbalken die Brennbärte zu entfernen. Je nach Einsatzort, Werkstücktemperatur, Werkstücklage, Querschnittsform, Materialqualität, Bartgröße u. a. wird die Bartentfernung jedoch nur unvollkommen bewerkstelligt.

Der vorliegenden Erfindung liegt daher die Aufgabe zugrunde, eine Stahlstranggießanlage der eingangs genannten Art verfügbar zu machen, bei der die Entfernung der Bärte kurz nach der Entstehung bei Einzel-, Zwillings- und Drillingslage in optimaler Weise an ruhenden und/oder bewegten Werkstükken möglich ist.

Die Erfindung besteht darin, daß bei einer Stahlstranggießanlage der eingangs genannten Art ein Scherbalken ortsfest oder verschiebbar unter der Bramme in der wagrechten Ebene schräg zur Bartlinie angeordnet eine geführte, an beiden Enden federnd höhenverstellbare Scherleiste einstückig, gegebenenfalls mit vorderer und hinterer Schneidkante, zum waagrechten oder in der senkrechten Ebene geneigten Andrücken an die Bartlinie trägt.

In ihrer vorteilhaften Ausbildung zeichnet sich die Erfindung dadurch aus, daß die Scherleiste aus beliebig vielen, einzeln geführten und federnd höhenverstellbaren Teilstücken, gegebenenfalls mit gemeinsamer vorderer und hinterer Schneidkante, die gerade, gebogen, gewellt oder aus mehreren anderen geometrischen Formen zusammengesetzt eine Linie oder Doppellinie bildet, besteht, vorzugsweise aus eckigen, runden oder seitlich abgeflachten, runden Klötzen, die im Scherbalken einzeln geführt und zum Beistellen und Andrücken in Gruppen oder einzeln und federnd vorzugsweise zusammen mit Abdeckstücken anhebbar und absenkbar sind.

In zweckmäßiger Ausbildung ist weiter vorgesehen, daß der Scherbalken für die Scherleisten, für Teilstücke der Scherleiste jedweder Form bzw. für die Scherklötze Führungen für Höhenverstellungen und Scherkraftaufnahme aufweist und Aufnahmen oder Befestigungsmöglichkeiten für federnde und bewegende Hubantriebe entsprechend der Zahl der Scherleisten bzw. der Scherklötze im Scherbalken vorgesehen sind.

Gemäß einer weiteren Fortbildung schlägt die Erfindung vor, daß die Aufnahmen oder Befestigungsmöglichkeiten der Hubantriebe oder federnden Auflagen der Scherklötze selbst als wesentliche Bestandteile der letzteren in den Scherbalken als zylindrische Bohrungen entsprechend der Teilstückzahl und Teilstückausführung der Scherleiste eingearbeitet sind, wobei diese als Federtaschen dienen oder als Zylinder für Pneumatik- oder Hydraulikkolben, mit denen die aneinander gereihten Teilstücke oder Scherklötze gehoben, angedrückt oder gesenkt werden, und zweckmäßig alle Zylinder mit wenigstens einer oder mehr Zu- und Abflußbohrungen versehen sind, um aus einzelnen oder gemeinsamen Druck- und Abflußleitungen ver- oder entsorgt zu werden.

In weiterer Ausbildung des Scherbalkens ist mit Vorteil vorgesehen, daß der Scherbalken Längsbohrungen oder längs verlaufende Leitungen aufweist, aus denen die Zylinder ver- und entsorgt werden oder die zum reinigenden Durchblasen oder als Kontroll- bzw. Steuerleitungskanäle für Sensoren zur Lagebestimmung oder -beobachtung der einzelnen Scherklötse oder von Scherklotzgruppen dienen.

Eine Fortbildung der Erfindung besteht darin, daß der Scherbalken zu einem Wagensystem gehört, das zum Verstellen oder zum scherenden Entbarten motorisch oder hydraulisch verfahren wird, wobei zum Entbarten bei bewegter Bramme das Wagensystem festgesetzt werden kann.

Desweiteren ist mit Vorteil eine Steuerung für das Verfahr- und Höhenverstellsystem vorgesehen, die die Abfolge von Hochstellen, Andrücken, Verfahren zum Scheren, Hochspringen und Absenken, Verfahren in Startstellung hinter die zweite Bartlinie einzeln oder gruppenweise für Scherleiste, Scherleistenteilstücke oder Scherklötze aufeinanderfolgend bewirkt, daß der Abstand zwischen zwei Bartlinien an zwei benachbarten Brammen nur wenig breiter ist als die Breite eines Scherleistenteilstückes bzw. Scherklotzes.

Eine Fortbildung der Erfindung betreffend die Hubantriebe besteht darin, daß die die Höhenverstellung der Scherleiste, Scherleistenteilstücke oder Scherklötze bewirkenden Hubantriebe mit mehr als einer Hubkraft zum schwachen Hochstellen und kräftigen Andrücken arbeiten können und in höchster Stellung selbsttätig auf Absenken und Untenhalten umschalten bzw. umgeschaltet werden können, z. B. indem ein ohne Widerstand (Bramme) ganz hochfahrender Hubantrieb einen Medienüberlauf auf einen bereits ganz oben stehenden Hubantrieb und dessen Herunterdrücken ermöglicht.

Um den entsprechenden Betriebserfordernissen zu genügen, kann vorgesehen sein, daß die Entbartungsmaschine bzw. -einrichtung einteilig oder mehrteilig hinter- bzw. nebeneinander, ortsfest und verfahrbar oder mehrfach angeordnet ist.

Desweiteren ist es möglich, daß die Entbartungsmaschine oder -einrichtung neben längsgeteilten Brammen angeordnet ist und in einer Rollenlücke quer zur Brammenlängsachse hin, auf, her und ab bewegend ein Längsbartteilstück entfernt, bevor die Bramme um eine Teilstücklänge weiterverfahren wird oder teilstückweise zwischen den Entbartungsvorgängen an bzw. unter der mit der Bartseite auskragend fest aufgelegten Bramme verfahren werden kann.

Bei der Bearbeitung einer ortsfesten Bramme hinter dem sich bewegenden Strang ist in vorteilhafter Weise gemäß der Erfindung vorgesehen, daß die Entbartungsmaschine oder -einrichtung in eine der letzten Lücken eines oder in die Lücke hinter einem auch hin- und herverfahrenden Schneid- bzw. Transportrollganges nahe an der einlaufseitigen Rolle angeordnet ist und den hinteren Bart einer ablaufenden Bramme ortsfest abschält, den vorderen Bart einer eingelaufenen Bramme nach dem Überlauf von hinten überholend abschert.

Die Erfindung soll nachstehend anhand eines Ausführungsbeispiels unter Bezugnahme auf die beigefügten Zeichnungen näher erläutert werden, wobei in den einzelnen Bildern gleiche Bezugszeichen sich auf gleiche Teile beziehen. In den Zeichnungen zeigen:

Bild 1a die Vorderansicht einer Stranggießanlage mit einer Bartbeseitigungseinrichtung;

Bild 1b eine Draufsicht auf die Stranggießanlage nach Bild 1a;

Bild 2a bis 2g eine schematische Darstellung der verschiedenen Möglichkeiten der Scherleistenanordnung bzw. -ausbildung in schematischer Darstellung;

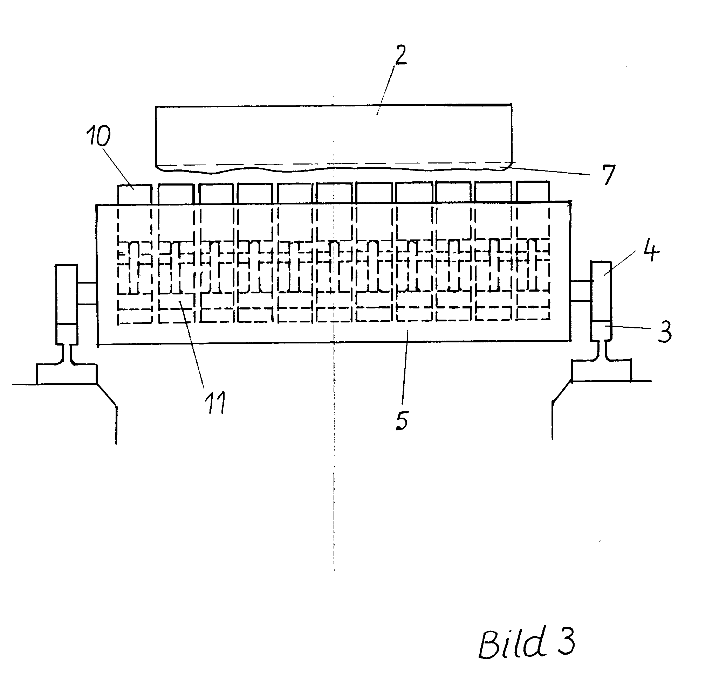

Bild 3 eine Seitenansicht einer bevorzugten Ausführungsform in schematischer Darstellung;

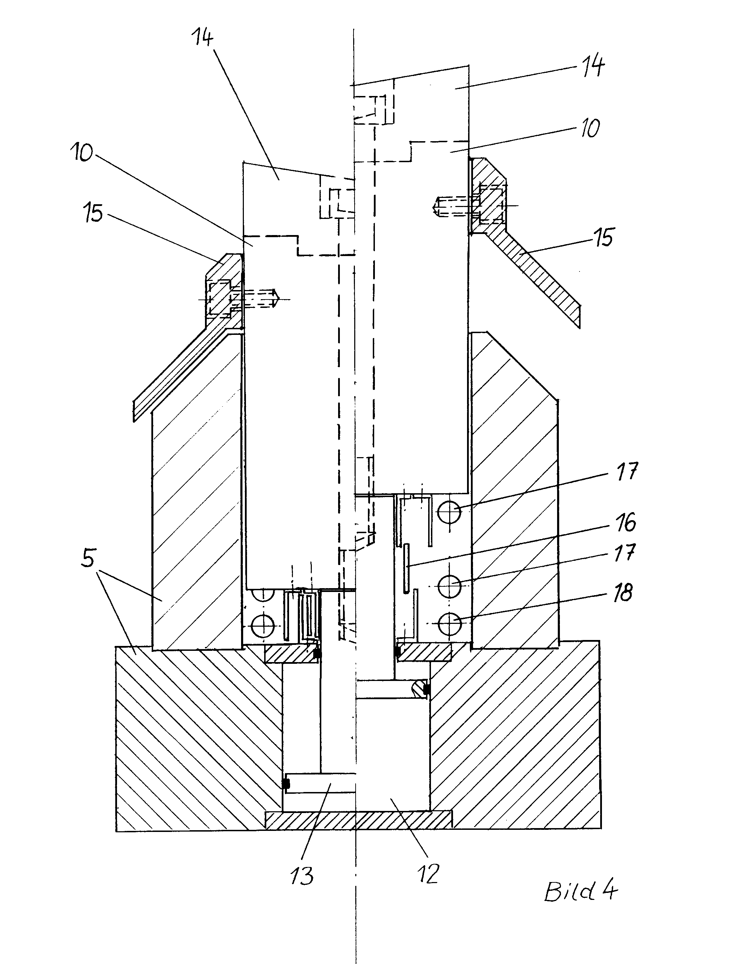

Bild 4 die konstruktive Ausbildung eines Elements in der Ausführungsform nach Bild 3.

In Bild 1a ist eine Bramme 2 nach dem Abtrennen vom Gießstrang dargestellt. Die Bramme 2 wird im Einlauf in eine Entbartungsposition gegen einen von oben eingeführten, nicht dargestellten Brammenanschlag gefahren und somit die Lage des an der unteren Schneidkante befindlichen Brennbartes 7 festgelegt. Eine Scherleiste 6 zum Entfernen von Brennbärten 7 wird danach angehoben, gegen die Brammenunterfläche in Bartnähe gedrückt und auf den Brammenanschlag, der nicht über die Unterfläche hinaus nach unten übersteht, zugefahren. Die Scherleiste 6 überfährt durch Ausführung oder Schrägstellung die Bartlinie 7 nach und nach. Dadurch ist es möglich, daß die Scherleiste 6 einer ein- oder ausgebauchten oder schräg von der waagrechten, abweichenden Bartlinie durch federndes, also auch nachgebendes Andrücken jederzeit erfolgt. Natürlich muß auch der Bart an der Endfläche der vorher abgetrennten Bramme 2 (X - 1) entfernt werden. Dazu kann diese vorherige Bramme auf der gleichen Transportlinie zurück gegen den gleichen Brammenanschlag gefahren werden wie die eben betrachtete Bramme X. Damit kann in der gleichen Transportlücke mit einer zweiten Scherleiste vielleicht gleichzeitig der hintere Brennbart 7 entfernt werden wie der vordere Brennbart 7 einer nachfolgenden Bramme. Bei geeigneter Ausführung ließen sich die beiden Brennbärte 7 in so benachbarter Lage mit einer Scherleiste 6 nacheinander entbarten.

Es ist vorgesehen, daß die Scherleiste unter einer Bramme 2, z. B. X, steht, gegen diese hochgefahren wird und angedrückt durch Verfahren den ersten Brennbart 7 entfernt. Danach wird das Schermesser abgesenkt, unter die andere Bramme 2, z. B. X - 1, verfahren, eingestellt wieder hochgedrückt, um dann in entgegengesetzter Richtung den zweiten Bart abzuscheren. Das kann auch in umgekehrter Reihenfolge durchgeführt werden. Ähnliches gilt bei stehender Scherleiste 6 und abscherend verfahrender Bramme 2, von ihnen zum Brammenende hin. So können auch nebeneinander liegende Werkstücke bei gleicher Anschlagslage in einem Arbeitsgang mit einer natürlich entsprechend langen Scherleiste 6 vom Brennbart befreit werden.

Je nach Brammengewicht und nach oben gerichtetem Scherdruck kann das Brammenende nachgeben und ein vielleicht flacherer Brennbart ohne Abscheren über die Scherleiste 6 rutschen. Um dieses zu verhindern, wird die Bramme 2 von oben her belastet, was durch aufgedrückte, nicht dargestellte Rollen bei dem Bartentfernen bewegten Brammen 2 bzw. durch aufgesetzte Niederhalter bei zum Bartentfernen feststehenden Brammen 2 gemacht werden kann.

Eine Entbartungsmaschine gemäß dieser Erfindung besteht in ortsfester Ausführung z. B. mit Niederhalterrollen aus einem Scherbalken 5, in dem auf beiden Seiten in der Scherleistenführung eine Scherleiste 6 auf Hubelementen 11, die z. B. als Hydraulikantriebe mit Zylinder 12 und Kolben 13 ausgeführt sind, aufliegt. In der angehobenen Position unterhalb der Unterfläche der Bramme 2 ist je nach Bauchigkeit oder Durchbiegung der Bramme 2 unter die ideale Unterfläche eines nach oben begrenzt (Stützlagerseite), und das andere mit vielleicht etwas weniger Hubkraft je nach Bauchigkeit oder Aufbiegung der Bramme 2 über die ideale Unterfläche nach oben begrenzt bewegt, aber auch von der Bramme selbst beim Überlauf der Bartlinie zurückgeschoben werden kann (Schiebelagerseite). Diese Begrenzungen sind durch Hubwegfestlegung bei der Auslegung der Geräte, Begrenzung der Menge der Hydraulikflüssigkeit oder durch mechanische Anschläge, z. B. Anschlagring auf der Kolbenstange oder ähnlich, herstellbar. Der Scherbalken 5 kann in der Brammenlängsachsenrichtung versetzt angeordnet sein, so daß er unter einem durch Platzverhältnisse, Spanlänge des abgescherten Brennbartes 7, Ausführung der Scherleiste 6 und Scherkraftbedarfbedingten Winkel von 0 bis 60°, vielleicht etwa 5° zum Brennbart 7 steht.

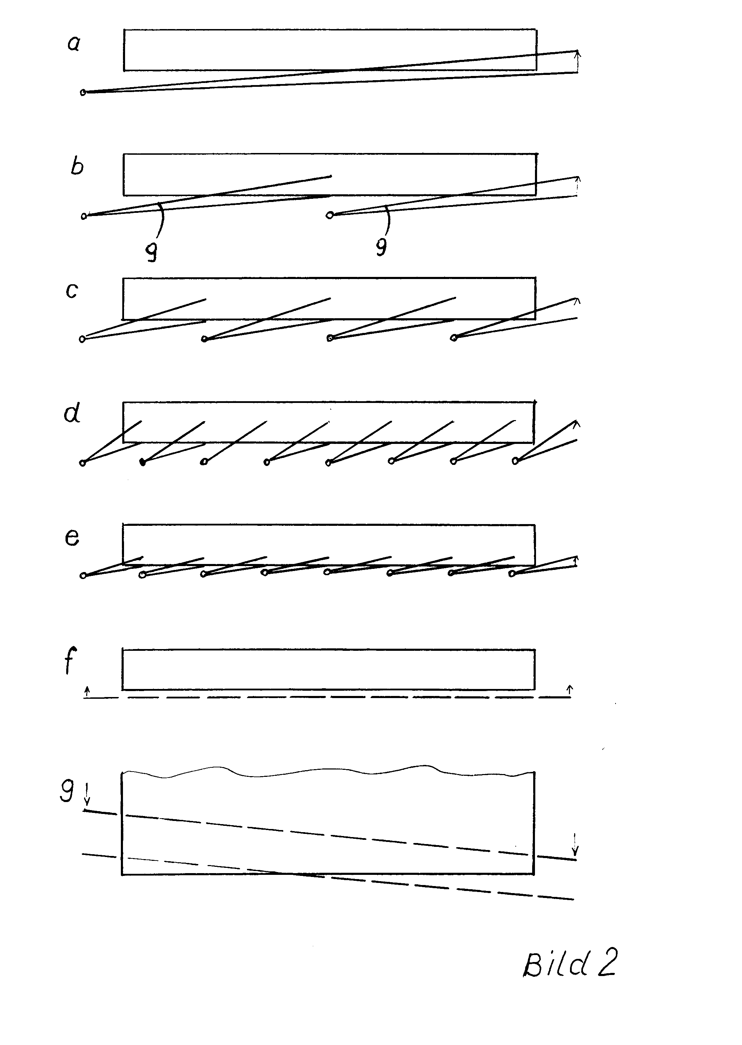

Zum Ausgleich verschiedener Höhen an der Vorder- und Hinterkante der Scherleiste 6 bei schräger Stellung zur Bartlinie 7 kann die Scherleiste 6 bzw. der Scherbalken 5 um seine eigene Längsachse in Lagern drehbar ausgeführt sein, wie es in Bild 2a schematisch dargestellt ist. Damit legt sich die Scherleiste 6 mit ihrer Oberfläche immer flach gegen die Schneidkante 8. Da diese durch Scherbalkendrehung entstandene, leichte Winkligkeit schon an der Brammenaußenseite mit dem Anfang des Bartabscherens entsteht, kommt es zu einem den Brennbart 7 abhebenden, abschälenden Scheren.

Der Scherbalken 5 ist eine extra tiefe, steife Balkenkonstruktion zur Aufnahme eines oder mehrerer austauschbarer Scherleisten-Teilstücke 9, die als gemeinsame Scherleiste 6 gegebenenfalls auf beiden Seiten für den vorderen und den hinteren Brennbart 7 einer Bramme 2 benutzt werden.

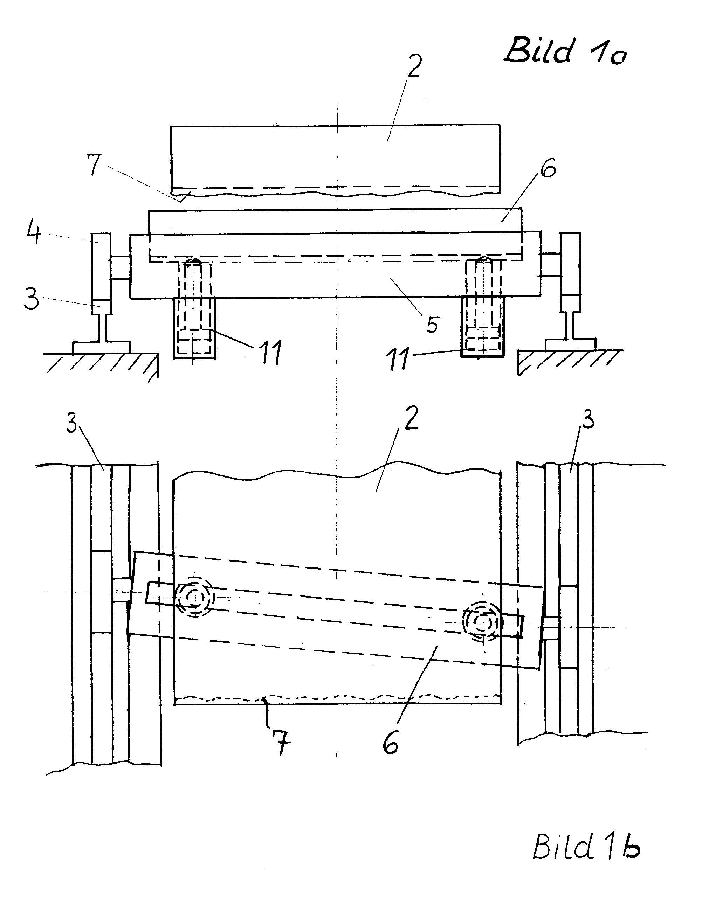

Damit bei einem abzuscherenden Bart nicht die gesamte Scherkraft aufzubringen ist, weist die Scherleiste 6 eine zur Kante der Bramme 2 und damit zum Verlauf des Brennbartes 7 winklige Stellung auf, wie es in Bild 1b und Bild 2g dargestellt ist.

Da die Bramme einen unregelmäßigen Oberflächenverlauf aufweisen kann, indem insbesondere die Oberfläche gekrümmt ist, verursacht eine durchgehende Scherleiste 6 Schwierigkeiten, weil auch der entsprechende Brennbart nicht in einer Ebene verläuft. Je nach den zu erwartenden Abweichungen kann daher die Scherleiste 6 mehr oder weniger unterteilt sein, wie es im Bild 2b bis 2e dargestellt ist. Durch eine entsprechende Aufteilung der Scherleiste 6 in Scherleistenteilstücke 9 ist eine Anpassung gegeben und damit ein optimales Entfernen eines unregelmäßig verlaufenden Brennbartes 7 möglich.

In verfahrbarer Ausführung besteht die Entbartungsmaschine für Sauerstoffschneidbärte gemäß dieser Erfindung mit etwa einem kombinierten Brammenanschlag/Niederhalter aus auch mit Scherkraft verfahr- bzw. verstellbaren Scherbalken 5, in dem Hubelemente 11 angeordnet sind, die die Scherleiste auf beiden Seiten mehr oder weniger auf die ideale Lage der Brammenunterfläche heben und andrücken. Die Scherleiste 6 und ihre Teilstücke 9 sind auf den Hubelementen 11 drehbar gelagert, um Schrägstellungen der Scherleiste 6 beim drehenden Scheren oder für aufeinanderfolgenden Überlauf über die Bartlinie zu ermöglichen. Für den Scherbalken 5 sind Laufrollen oder Gleitsysteme mit Antrieben bevorzugt hydraulischer Art vorgesehen, die ein verstellendes Verfahren oder ein scherendes Verfahren ermöglichen.

Ist die Scherleiste 6 einteilig ausgeführt, so kann es zum besseren scherenden Nachfolgen einer Bartlinie 7 über seine Länge an der Oberfläche gekrümmt sein; auch ist es möglich, zum Beispiel bei nur einseitigem Einsatz wegen der Geometrie bei schräger Scherleiste in Bezug auf die Bartlinie 7, die Vorderkante der Scherleiste 6 höher auszuführen als die Hinterkante, womit der Scherleistenquerschnitt nicht mehr rechteckig bzw. quadratisch, sondern nur noch viereckig mit verschiedenen Eckwinkeln ist.

Da die Scherleiste 6 beim Überlaufen der Bartlinie 7 im Bereich des vorwiegend feststehenden Hubelements 11 dann auf der anderen Seite vor allem bei sehr breiten Brammen oder Zwillings- bzw. Drillingswerkstücken besonders hoch gedrückt werden muß, ist auch hier nach Bild 2 vorteilhaft eine Aufteilung in Scherleistenteilstücke 9, die in dem Scherbalken 5, geführt von je zwei Hubelementen 11, beidseitig erst hochgestellt und dann angedrückt werden. Bei einer Zweiteilung der Scherleiste 6 halbiert sich der maximale Hochstand und Hubelementenweg auf einer Seite auf die Hälfte.

Dieser Gedanke führt weitergetragen zu vielen kleinen Scherleistenteilstücken 9, die besonders kurz keine zwei Hubelemente 11 mehr erlauben, bei geeigneter Führung auch keine mehr brauchen, da Schräglage und Bauchigkeit oder verschiedene Höhen bei Zwillings- oder Drillingsstücken in der senkrechten Ebene auf kurze Teilstrecken begrenzt unbedeutend geworden ist und die gesamte Abweichung der Bartlinie 7 von der idealen waagerechten Lage durch geringfügig unterschiedliche Höheneinstellung der einzelnen Scherleistenteilstücke 9 abgedeckt wird. Dabei bleiben alle Teilstücke 9, wenn auch nicht in der Höhe, aber sonst in Vorder- bzw. Hinterkantenflucht.

Eine vorteilhafte erfindungsgemäße Ausführung der Scherleiste 6 ist die Auflösung der einteiligen Scherleiste 6 in eine solche, die aus in Flucht hintereinander einzeln höhenverschiebbar im Scherbalken 5 angeordneten Scherklötzen 10 besteht, die auf Hubelementen 11 sitzen, wodurch ihre oberste und unterste Stellung im Scherbalken 5 bzw. zueinander bestimmt ist. Diese Scherklötze 10 sind von quadratischem, rechteckigem, polygonem oder rund geformtem Querschnitt, um die Höhenverschiebung zu ermöglichen, eine Verdrehung zu verhindern, ein Ausbrechen von Scherklotzkanten zu vermeiden und möglichst ein Zerbrechen des Brennbartes 7 beim Entbarten in einzelne Scherspäne sicherzustellen. Bei symmetrischem Scherklotzquerschnitt ist eine mehr- bzw. zweiseitige Benutzung vorteilhaft, insbesondere wenn Vorder- und Rückseite der gesamten Scherleiste 6 abwechselnd zum Einsatz kommen.

Um den Anpreßdruck der Scherklötze an die Unterfläche des Stranges 1 bzw. der Bramme 2 und damit die horizontal notwendige Abscherkraft möglichst gering zu halten, wird erfindungsgemäß jeder Scherklotz 10 oder jede Gruppe desselben mit verschiedenen Drücken nach oben oder unten gedrückt, indem Einzel- oder Gruppensteuerung bzw. Versorgung vorgesehen ist. Zweckmäßig wird eine automatische Druck- bzw. Betätigungsveränderung der jeweiligen Scherklötze 10 bzw. Gruppen derselben durch stufige Ausführung der Antriebs- oder Federelemente erzeugt. Dabei können diese Elemente selbst durch ihre jeweilige Arbeitsstellung, die nachfolgend tätig werdenden Elemente zum Anheben, verstärktem Andrücken oder Absenken vorgesteuert oder gesteuert werden.

Durch verbessernde Zusätze oder Abänderungen werden die Wirkungsweise, Lebensdauer und Kosten dieses Entbartungssystems günstig beeinflußt. Dazu gehört beispielsweise die Ergänzung des Scherklotzes 10 mit einer hochfesten Scherklotzkappe 14 oder die Anordnung von Kontrollkanälen, durch die beispielsweise mittels Lichtschranken die vollständige Andrückstellung oder Absenkstellung aller Scherklötze 10 überwacht wird. Andererseits bewirken querlaufende Durchblaskanäle 18 das ständige Reinigen der Einrichtung von Zunderstaub, der trotz zusätzlicher Abdeckstücke 15 in die Führungen der Scherklötze 10 eindringt. Kolben 13 und Zylinder 12 der Hubelemente 11 werden zusätzlich durch eine Teleskophülse 16 gegen Verschmutzung geschützt.

Bei Längsteil-Brennbärten 7 können ebensolche Entbartungsmaschinen längsgeteilte Brammen 2 in Rollgangslücken oder bei seitlich überkragend aufgelegten an diesen abschnittsweise entlangfahrend quer zur Brammenlängsachse entbarten. Auch sind beliebige Kombinationen von nebeneinander oder hintereinander ortsfest over verstellbar oder verfahrbar zum Entfernen von Längs- oder Querbrennbärten möglich.

## Patentansprüche

1. Stahlstranggießanlage mit doppelt und schnell wirkender mechanischer Entbartungsmaschine bzw. -einheit für beim thermochemischen Unterteilen des Stranges entstehende Brennbärte, dadurch gekennzeichnet, daß ein Scherbalken ortsfest oder verschiebbar unter der Bramme in der waagerechten Ebene schräg zur Bartlinie angeordnet eine geführte an beiden Enden federnd höhenverstellbare Scherleiste, gegebenenfalls mit vorderer und hinterer Schneidkante zum waagerechten oder in der senkrechten Ebene geneigten Andrücken an die Bartlinie trägt.

2. Stahlstranggießanlage nach Anspruch 1, dadurch gekennzeichnet, daß die Scherleiste aus beliebig vielen einzeln geführten und federnd höhenverstellbaren Teilstücken, gegebenenfalls mit gemeinsamer vorderer und hinterer Schneidkante, die gerade, gebogen, gewellt oder aus mehreren anderen geometrischen Formen zusammengesetzt eine Linie oder Doppellinie bildet, besteht, vorzugsweise aus eckigen, runden oder seitlich abgeflachten runden Klötzen, die im Scherbalken einzeln geführt und zum Beistellen und Andrücken in Gruppen oder einzeln und federnd vorzugsweise zusammen mit Abdeckstücken anhebbar und absenkbar sind.

3. Stahlstranggießanlage nach Anspruch 1 oder 2, dadurch gekennzeichnet, daß der Scherbalken für die Scherleisten, für Teilstücke der Scherleiste jedweder Form bzw. für die Scherklötze Führungen für Höhenverstellungen und Scherkraftaufnahme aufweist und Aufnahmen oder Befestigungsmöglichkeiten für federnde und bewegende Hubantriebe entsprechend der Zahl der Scherleisten bzw. der Scherklötze im Scherbalken vorgesehen sind.

4. Stahlstranggießanlage nach einem der Ansprüche 1 bis 3, dadurch gekennzeichnet, daß die Aufnahmen oder Befestigungsmöglichkeiten der Hubantriebe oder federnden Auflagen der Scherklötze selbst als wesentliche Bestandteile der letzteren in den Scherbalken als zylindrische Bohrungen entsprechend der Teilstückzahl und Teilstückausführung der Scherleiste eingearbeitet sind, wobei diese als Federtaschen dienen oder als Zylinder für Pneumatik- oder Hydraulikkolben, mit denen die aneinander gereihten Teilstücke oder Scherklötze gehoben, argedrückt oder gesenkt werden, und zweckmäßig alle Zylinder mit wenigstens einer oder mehr Zu- und Abflußbohrungen versehen sind, um aus einzelnen oder gemeinsamen Druck- und Abflußleitungen ver- oder entsorgt zu werden.

5. Stahlstranggießanlage nach einem der Ansprüche 1 bis 4, dadurch gekennzeichnet, daß der Scherbalken Längsbohrungen oder langslaufende Leitungen aufweist, aus denen die Zylinder ver- und entsorgt werden oder die zum reinigenden Durchblasen oder als Kontroll- bzw. Steuerleitungskanäle für Sensoren zur Lagebestimmung oder -beobachtung der einzelnen Scherklötze oder von Scherklotzgruppen dienen.

6. Stahlstranggießanlage nach einem der Ansprüche 1 bis 5, dadurch gekennzeichnet, daß der Scherbalken zu einem Wagensystem gehört, das zum Verstellen oder zum scherenden Entbarten motorisch oder hydraulisch verfahren wird, wobei zum Entbarten bei bewegter Bamme das Wagensystem festgesetzt werden kann.

7. Stahlstranggießanlage nach einem der Ansprüche 1 bis 6, dadurch gekennzeichnet, daß eine Steuerung für das Verfahr- und Höhenverstellsystem vorgesehen ist, die die Abfolge von Hochstellen, Andrücken, Verfahren zum Scheren, Hochspringen und Absenken, Verfahren in Startstellung hinter die 2. Bartlinie einzeln oder gruppenweise für Scherleiste, Scherleistenteilstücke oder Scherklötze aufeinanderfolgend bewirkt, daß der Abstand zwischen zwei Bartlinien an zwei benachbarten Brammen nur wenig breiter ist als die Breite eines Scherleistenteilstückes bzw. Scherklotzes.

8. Stahlstranggießanlage nach einem der Ansprüche 1 bis 7, dadurch gekennzeichnet, daß die die Höhenverstellung der Scherleiste, Scherleistenteilstücke oder Scherklötze bewirkenden Hubantriebe mit mehr als einer Hubkraft zum schwachen Hochstellen und kräftigen Andrücken arbeiten können und in höchster Stellung selbsttätig auf Absenken und Untenhalten umschalten bzw. ungeschaltet werden können, z. B. indem ein ohne Widerstand (Bramme) ganz hochfahrender Hubantrieb einen Medienüberlauf auf einen bereits ganz oben stehenden Hubantrieb und dessen Herunterdrücken ermöglicht.

9. Stahlstranggießanlage nach einem der Ansprüche 1 bis 8, dadurch gekennzeichnet, daß die Entbartungsmaschine bzw. -einrichtung einteilig oder mehrteilig hinter- bzw. nebeneinander, ortsfest und verfahrbar oder mehrfach angeordnet ist.

10. Stahlstranggießanlage nach einem der Ansprüche 1 bis 9, dadurch gekennzeichnet, daß die Entbartungsmaschine oder -einrichtung neben längsgeteilten Brammen angeordnet ist und in einer Rollenlücke quer zur Brammenlängachse hin, auf, her und ab bewegend ein Längsbartteilstück entfernt bevor die Bramme um eine Teilstücklänge weiterverfahren wird oder teilstückweise zwischen den Entbartungsvorgängen an bzw. unter der mit der Bartseite auskragend fest aufgelegten Bramme verfahren werden kann.

11. Stahlstranggießanlage nach einem der Ansprüche 1 bis 10, dadurch gekennzeichnet, daß die Entbartungsmaschine oder -einrichtung in eine der letzten Lücken eines oder in die Lücke hinter einem auch hin- und herverfahrenden Schneid- bzw. Transportrollganges nahe an der einlaufseitigen Rolle angeordnet ist und den hinteren Bart einer ablaufenden Bramme ortsfest abschält, den vorderen Bart einer eingelaufenen Bramme nach dem Überlauf von hinten überholend abschert.

*Bild 1a*

*Bild 1b*

a

b

9   9

c

d

e

f

g

*Bild 2*

Bild 3

Bild 4

**Europäisches Patentamt**

**EUROPÄISCHER RECHERCHENBERICHT**

Nummer der Anmeldung

**EP 90 11 2027**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 467 041   (NIPPON KOKAN) <br> * Patentansprüche; Seite 3, Zeilen 24-30 * <br> — — — | 1-11 | B 22 D 11/126 <br> B 23 D 79/02 |
| Y | EP-A-0 240 130   (KEIBLER-THOMPSON) <br> * Abbildung 7; Seite 12, Zeile 19 - Seite 13, Zeile 13; Ansprüche 6,7 * <br> — — — | 1-11 | |
| A | PATENT ABSTRACTS OF JAPAN, Band 8, Nr. 90 (M-292)[1527], 25. April 1984; <br> & JP-A-59 7468 (SUMITOMO) 14-01-1984 <br> * Das ganze Dokument * <br> — — — | 1,2,6 | |
| A | EP-A-0 136 232   (FIVES-CAIL BABCOCK) <br> * Abbildung 1; Patentansprüche * <br> — — — | 1,2,6 | |
| A | EP-A-0 064 083   (KAWASAKI) <br> * Abbildungen 1,2 * <br> — — — — — | 1,6 | |

**RECHERCHIERTE SACHGEBIETE (Int. Cl.5)**

B 22 D
B 23 D

**Der vorliegende Recherchenbericht wurde für alle Patentansprüche erstellt**

| Recherchenort | Abschlußdatum der Recherche | Prüfer |
|---|---|---|
| Den Haag | 22 Februar 91 | OBERWALLENEY R.P.L.I |